# EUROPÄISCHE PATENTSCHRIFT

(11) **EP 2 906 657 B1**
(45) Veröffentlichungstag und Bekanntmachung des Hinweises auf die Patenterteilung: **11.01.2017**
(21) Anmeldenummer: 13773801.9
(22) Anmeldetag: 09.10.2013
(51) Int. Cl.: B29L 7/00, B29C 43/00, B29C 43/24, B29C 45/00, C08J 5/18, C08K 9/10, C09K 5/06, F28D 20/02, B29K 101/12

(54) **FLÄCHENGEBILDE ODER FORMKÖRPER ENTHALTEND LATENTE WÄRMESPEICHER**
SHEETLIKE STRUCTURE OR SHAPED ARTICLE COMPRISING LATENT HEAT STORAGE MEDIA
STRUCTURE PLANE OU CORPS MOULÉ CONTENANT DES ACCUMULATEURS DE CHALEUR LATENTE

(30) Priorität: 09.10.2012 DE 102012218378
(43) Veröffentlichungstag der Anmeldung: 19.08.2015
(73) Patentinhaber: Wacker Chemie AG, 81737 München (DE)
(72) Erfinder: BIENERTH, Holger, 81825 München (DE); EDER, Klaus-Jürgen, 84335 Mitterskirchen (DE)
(74) Vertreter: Ege, Markus
(86) Internationale Anmeldenummer: PCT/EP2013/071010
(87) Internationale Veröffentlichungsnummer: WO 2014/056963

(56) Entgegenhaltungen:
- EP-A1- 1 321 182
- WO-A1-03/016650
- WO-A1-2006/092439
- WO-A1-2010/076118
- WO-A1-2012/069976
- WO-A1-2013/135771
- DE-A1-102005 002 411

## Beschreibung

Die Erfindung betrifft Verfahren zur Herstellung von Flächengebilden oder Formkörpern enthaltend latente Wärmespeicher, die danach erhältlichen Flächengebilde oder Formkörper sowie deren Verwendung beispielsweise in der Bauindustrie zur Beschichtung von Decken.

Latente Wärmespeicher sind Materialien, die bei bestimmten Temperaturen reversible thermodynamische Zustandsänderungen erfahren, wie beispielsweise fest/flüssig-Phasenübergänge, und die dabei auftretende Phasenumwandlungsenthalpie der Umgebung entziehen bzw. an die Umgebung abgeben. Deswegen sind latente Wärmespeicher geeignet, Temperaturschwankungen im Bereich ihrer thermodynamischen Zustandsänderung, wie beispielsweise ihrer Schmelz- bzw. Erstarrungstemperatur, zu verhindern oder zumindest zu dämpfen. Beispiele für gängige latent Wärme speichernde Materialien sind Paraffinöle, Fettsäuren oder Fettwachse. Latente Wärmespeicher werden in vielerlei Anwendungen eingesetzt. So beschreibt die US 2001000517 die Beschichtung von Textilien mit derartigen Materialien. Die US 5565132 beschreibt Verfahren, in denen Zusammensetzungen enthaltend latent Wärme speicherndes Material, Polymere und Silica-Partikel über eine Schmelze zu Platten, Pellets oder Fasern verarbeitet werden.

Bei Vorliegen in der flüssigen Phase werden latente Wärmespeicher jedoch leicht freigesetzt und an die Umgebung emittiert. Um dies zu verhindern, wurde vielfach empfohlen, das latent Wärme speichernde Material mit einem höher schmelzenden Material zu ummanteln, wie beispielsweise in der US-2011169179A beschrieben. Die WO99/24525 lehrt Mikrokapseln, bei denen eine Kapselwand aus hochvernetzten Methacrylsäureesterpolymeren das latent Wärme speichernde Material umgibt. Die US 2006272281, US 8070876, WO11071402 und US 2011108241A beschreiben den Einsatz derartiger Mikrokapseln in Bauanwendungen. Die EP1321182 empfiehlt, entsprechende Mikrokapseln als Zusatz für polymere Formkörper einzusetzen. Die WO 2012/069976 offenbart Zusammensetzungen enthaltend thermoplastische Polymere basierend auf ethylenisch ungesättigten Monomeren und mikroverkapselte latente Wärmespeicher sowie deren thermoplastische Verarbeitung mittels Extrusion. Die DE102005002411 führt für die Verarbeitung von Zusammensetzungen basierend auf mikroverkapselten Latentwärmespeichern und polymeren Bindemitteln eine Vielzahl von Verfahren an, wobei im Falle der unter anderem erwähnten thermoplastischen Umformungstechnik keine Trockenmischungen eingesetzt werden. Die WO2013/135771 beschreibt die Herstellung von latente Wärmespeicher enthaltenden Flächengebilden oder Formkörpern, indem Mischungen umfassend Mikrokapseln, die latente Wärmespeicher enthalten, und Polymere von ethylenisch ungesättigten Monomeren, wie unter anderem Polypropylen, mittels thermoplastischer Umformungstechniken, wie Extrudieren, Spritzgießen, Verpressen oder Kalandrieren, verarbeitet werden. Des Weiteren erwähnt WO2013/135771, dass deren formbare Massen als Additiv zusätzlich Polyvinylpyrrolidon enthalten können. Eine Herausforderung besteht weiterhin darin, solche Mikrokapseln zu marktgängigen Produkten weiterzuverarbeiten, wie beispielsweise in der EP1484378 diskutiert. Im Technologiegebiet der Kunststoffe sind thermoplastische Verfahren sehr verbreitet. Bei der thermoplastischen Verarbeitung der Mikrokapseln besteht jedoch das Problem, dass die Mikrokapseln leicht zu erheblichem Anteil beschädigt werden, mit der Folge, dass das latent Wärme speichernde Material bei Übergang in die flüssige Phase aus den Mikrokapseln in die Umgebung abgegeben werden kann und somit der Vorteil der Mikrokapseln verloren geht. Solche Probleme treten beispielsweise bei der thermoplastischen Verarbeitung von Zusammensetzungen auf, die neben den Mikrokapseln Polyurethan-Gießharze enthalten.

Vor diesem Hintergrund bestand die Aufgabe, neue Ansätze zu entwickeln, nach denen latente Wärmespeicher enthaltende Mikrokapseln zu Flächengebilden oder Formkörpern verarbeitet werden können. Des Weiteren sollten so Flächengebilde oder Formkörper zugänglich werden, die einen möglichst hohen Anteil an den genannten Mikrokapseln enthalten. Die Form, wie Schichtdicken, der Flächengebilde oder Formkörper sollte in einem großen Umfang nach Belieben variiert werden können.

Überraschenderweise wurde diese Aufgabe gelöst, indem Trockenmischungen umfassend latente Wärmespeicher enthaltende Mikrokapseln und Schutzkolloid-stabilisierte, in Wasser redispergierbare Polymerpulver von Polymeren auf Basis von ethylenisch ungesättigten Monomeren thermoplastisch verarbeitet wurden.

Gegenstand der Erfindung sind Verfahren zur Herstellung von latente Wärmespeicher enthaltenden Flächengebilden oder Formkörpern, dadurch gekennzeichnet, dass Trockenmischungen umfassend ein oder mehrere Mikrokapseln, die ein oder mehrere latente Wärmespeicher enthalten, und ein oder mehrere Schutzkolloid-stabilisierte, in Wasser redispergierbare Polymerpulver von Polymeren auf Basis von einem oder mehreren ethylenisch ungesättigten Monomeren ausgewählt aus der Gruppe umfassend Vinylester, (Meth)acrylsäureester, Vinylaromaten, Olefine, 1,3-Diene und Vinylhalogenide mittels thermoplastischer Umformungstechniken ausgewählt aus der Gruppe umfassend Extrudieren, Spritzgießen, Verpressen und Kalandrieren verarbeitet werden.

Ein weiterer Gegenstand der Erfindung sind latente Wärmespeicher enthaltende Flächengebilde oder Formkörper erhältlich nach dem vorgenannten, erfindungsgemäßen Verfahren.

Geeignete Vinylester sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, Vinylmyristat, Vinylpalmitat, Vinylstearat, Vinylarachinat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Laurylacrylat, Myristilacrylat, Stearylacrylat, Palmitylacrylat, Laurylmethacrylat, Myrystilmethacrylat, Stearylmethacrylat oder Palmitylmethacrylat. Besonders bevorzugt sind Methylacrylat, Methylmethacrylat, n-Butylacrylat, t-Butylacrylat oder 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien oder Isopren.

Gegebenenfalls können noch 0,1 bis 10 Gew.-%, bezogen auf das Gesamtgewicht des Monomergemisches, Hilfsmonomere copolymerisiert werden. Bevorzugt werden 0,5 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid oder Acetylacetoxyethylacrylat oder -methacrylat.

Vorzugsweise enthalten die ethylenisch ungesättigten Monomere nur eine ethylenisch ungesättigte Gruppe.

Bevorzugt werden Homo- oder Mischpolymerisate, welche ein oder mehrere Monomere aus der Gruppe umfassend Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten.

Mehr bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; Mischpolymerisate mit Vinylacetat und einem oder mehreren (Meth)Acrylsäureestern von unverzweigten oder verzweigten Alkoholen mit 1 bis 15 C-Atomen, insbesonders Methylacrylat, Ethylacrylat, Propylacrylat, n-Butylacrylat, 2-Ethylhexylacrylat und gegebenenfalls Ethylen; Mischpolymerisate mit ein oder mehreren Vinylestern, Ethylen und einem oder mehreren Vinylhalogeniden; Mischpolymerisate mit einem oder mehreren (Meth)Acrylsäureestern von unverzweigten oder verzweigten Alkoholen mit 1 bis 15 C-Atomen, wie n-Butylacrylat und 2-Ethylhexylacrylat und/oder Methylmethacrylat; Mischpolymerisate mit Styrol und einem oder mehreren Monomeren aus der Gruppe Methylacrylat, Ethylacrylat, Propylacrylat, n-Butylacrylat, 2-Ethylhexylacrylat; Mischpolymerisate mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Besonders bevorzugt werden Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von ein oder mehreren Vinylestern, 1 bis 50 Gew.-% Ethylen und vorzugsweise 1 bis 60 Gew.-% (Meth)-Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass im Allgemeinen eine Glasübergangstemperatur Tg von ≤ +120°C, vorzugsweise -50°C bis +60°C, noch mehr bevorzugt -30°C bis +40°C und am meisten bevorzugt -15°C bis +20°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in bekannter Weise beispielsweise nach dem Emulsionspolymerisationsverfahren oder nach dem Suspensionspolymerisationsverfahren in Gegenwart von Emulgatoren oder vorzugsweise von Schutzkolloiden, vorzugsweise nach dem Emulsionspolymerisationsverfahren, wobei die Polymerisationstemperatur im Allgemeinen 20°C bis 100°C, vorzugsweise 60°C bis 90°C beträgt, und bei der Copolymerisation von gasförmigen Comonomeren, wie Ethylen, vorzugsweise unter Druck, im Allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Zur Steuerung des Molekulargewichts können während der Polymerisation regelnde Substanzen eingesetzt werden. Zur Stabilisierung können Schutzkolloide, gegebenenfalls in Kombination mit Emulgatoren, eingesetzt werden. Die Polymere liegen vorzugsweise in Form von Schutzkolloid stabilisierten, wässrigen Dispersionen vor.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Geeignete Emulgatoren sind beispielsweise anionische, kationische oder nichtionische Emulgatoren, wie anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Im Allgemeinen werden 1 bis 5 Gew.-% Emulgatoren eingesetzt, bezogen auf das Gesamtgewicht der Monomere. Vorzugsweise wird ohne Zusatz von Emulgatoren polymerisiert.

Die so erhältlichen wässrigen Dispersionen haben einen Feststoffgehalt von vorzugsweise 30 bis 75 Gew.-%, besonders bevorzugt 50 bis 60 Gew.-%.

Zur Überführung der Polymere in Wasser redispergierbare Polymerpulver können die Dispersionen, gegebenenfalls nach Zusatz von weiteren Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen erfolgen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0,5 bis 30 Gew.-%, bezogen auf die polymeren Bestandteile der Dispersion, eingesetzt. Das heißt die Gesamtmenge an Schutzkolloid vor dem Trocknungsvorgang soll vorzugsweise mindestens 1 bis 30 Gew.-%, bezogen auf den Polymeranteil betragen; besonders bevorzugt werden insgesamt 5 bis 20 Gew.-% Schutzkolloid, bezogen auf die polymeren Bestandteile der Dispersion, eingesetzt. Geeignete Trocknungshilfen sind beispielsweise die bereits genannten Schutzkolloide.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise 1 bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Die Polymere werden in Form von Schutzkolloid-stabilisierten, in Wasser redispergierbaren Polymerpulvern eingesetzt.

Die latenten Wärmespeicher sind in Mikrokapseln eingebaut bzw. eingeschlossen oder eingebettet. Bei Mikrokapseln handelt es sich im Allgemeinen um Kern-Schale-Strukturen. Der Begriff Kern-Schale Struktur ist dem Fachmann bekannt und bezeichnet Strukturen, bei denen eine Substanz bzw. eine Zusammensetzung (Kern) von einer anderen Substanz bzw. Zusammensetzung (Schale) umhüllt wird. Die Herstellung entsprechender latent wärme speichernden Mikrokapseln ist beispielsweise aus der WO99/24525 bekannt.

Im Kern sind üblicherweise die latent Wärme speichernden Materialien enthalten. Der Kern enthält vorzugsweise mindestens 50 Gew.-%, besonders bevorzugt mindestens 70 Gew.-% und am meisten bevorzugt mindestens 80 Gew.-% latent Wärme speichernde Materialien, bezogen auf das Gesamtgewicht des Kerns einer Mikrokapsel. Die latent Wärme speichernden Materialien haben vorzugsweise einen fest/flüssig Phasenübergang im Temperaturbereich von -20 bis 120°C, besonders bevorzugt 0 bis 60°C und am meisten bevorzugt 0 bis 30°C.

Beispiele für latent Wärme speichernde Materialien sind aliphatische Kohlenwasserstoff-Verbindungen, wie gesättigte oder ungesättigte C₁₀ bis C₄₀-Kohlenwasserstoffe, die verzweigt oder bevorzugt linear sind, beispielsweise n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan oder cyclische Kohlenwasserstoffe, beispielsweise Cyclohexan, Cyclooctan, Cyclodecan; aromatische Kohlenwasserstoff-Verbindungen, wie Benzol, Naphthalin, Biphenyl, o- oder m-Terphenyl, C₁ bis C₄₀-Alkyl-substituierte aromatische Kohlenwasserstoffe, wie Dodecyl- benzol, Tetradecylbenzol, Hexadecylbenzol, Hexylnaphthalin oder Decylnaphthalin; gesättigte oder ungesättigte C₆ bis C₃₀-Fettsäuren, wie Laurin-, Stearin-, Myristin-, Palmitin-, Öl- oder Behensäure; Fettalkohole, wie Lauryl-, Stearyl-, Oleyl-, Myristyl-, Cetyl- alkohol oder Kokosfettalkohol; C₆ bis C₃₀-Fettamine, wie Decylamin, Dodecylamin, Tetradecylamin oder Hexadecylamin; Ester wie C₁ bis C₁₀-Alkylester von Fettsäuren, wie Propylpalmitat, Methylstearat oder Methylpalmitat oder Methylcinnamat; natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren; halogenierte Kohlenwasserstoffe, wie Chlorparaffin, Bromoctadecan, Brompentadecan, Bromnonadecan, Bromeicosan oder Bromdocosan.

Die Schale der Mikrokapseln ist üblicherweise aus Polymeren aufgebaut. Die Polymere der Schale basieren im Allgemeinen auf einem oder mehreren der oben genannten ethylenisch ungesättigten Monomeren und üblicherweise einem oder mehreren polyfunktionellen Monomeren.

Polyfunktionelle Monomere sind beispielsweise Ester oder Ether von Diolen oder Polyolen mit Acrylsäure oder Methacrylsäure, ferner die Diallyl- und Divinylether dieser Diole. Bevorzugt sind Trimethylolpropantriacrylat oder -methacrylat, Pentaerythrittriallylether, Pentaerythrittetraacrylat, Ethandioldiacrylat, Divinylbenzol, Ethylenglykoldimethacrylat, 1, 3-Butylenglykoldimethacrylat, Methallylmethacrylamid, Allylmethacrylat, insbesondere Propandiol-, Butandiol-, Pentandiol- oder Hexandioldiacrylat bzw. die entsprechenden Methacrylate.

Der Anteil der polyfunktionellen Monomere beträgt üblicherweise bis zu 80 Gew.-%, vorzugsweise 5 bis 60 Gew.-% und besonders bevorzugt 10 bis 50 Gew.-%, bezogen auf das Gesamtgewicht der Monomere, die die Schale der Mikrokapseln ausbilden.

Die Mikrokapseln haben Partikelgrößen von vorzugsweise 1 bis 35 µm und besonders bevorzugt von 3 bis 10 µm (Bestimmung mittels statistischer Lichtstreuung mit dem Gerät TGV-Coulter LS 13320).

Die Trockenmischungen für die thermoplastischen Umformungstechniken enthalten die Polymere auf Basis von einem oder mehreren ethylenisch ungesättigten Monomeren und die Mikrokapseln, die ein oder mehrere latente Wärmespeicher enthalten, im Gewichtsverhältnis von vorzugsweise 4 : 1 bis 1 : 4, besonders bevorzugt 3 : 1 bis 1 : 3, noch mehr bevorzugt 2 : 1 bis 1 : 2 und am meisten bevorzugt 1 : 1.

Die Trockenmischungen für die thermoplastischen Umformungstechniken basieren auf vorzugsweise 10 bis 90 Gew.-%, besonders bevorzugt 30 bis 70 Ges.-% und am meisten bevorzugt 40 bis 60 Gew.-% an Polymeren auf Basis von einem oder mehreren ethylenisch ungesättigten Monomeren; und/oder vorzugsweise 10 bis 90 Gew.-%, besonders bevorzugt 30 bis 70 Gew.-% und am meisten bevorzugt 40 bis 60 Gew.-% an Mikrokapseln, die ein oder mehrere latente Wärmespeicher enthalten, jeweils bezogen auf das Trockengewicht der Trockenmischungen.

Alternative Polymere, wie Polyurethane, sind in den Trockenmischungen zu vorzugsweise weniger als 20 Gew.-%, besonders bevorzugt weniger als 10 Gew.-% und noch mehr bevorzugt weniger als 5 Gew.-% enthalten, jeweils bezogen auf das Trockengewicht der Trockenmischungen. Am meisten bevorzugt enthalten die Trockenmischungen kein Polyurethan.

Gegebenenfalls können bei der Herstellung der latente Wärmespeicher enthaltenden Flächengebilde oder Formkörper noch Zusatzstoffe wie Gleitmittel, beispielsweise Calcium- oder Zinkstearat, gängige Flammschutzmittel, Weichmacher, Antioxidantien, UV-Stabilisatoren, Antistatika, Haftvermittler, Antiblockmittel, Farbstoffe, Pigmente, Füllstoffe, Verarbeitungshilfen, oder Peroxide wie Peroxodicarbonat zur Nachvernetzung eingesetzt werden. Bevorzugt sind hierbei Gleitmittel und Flammschutzmittel. Flammschutzmittel können beispielsweise zu 3 bis 10 Gew.-% enthalten sein, bezogen auf das Trockengewicht der Trockenmischungen.

Des Weiteren können die Trockenmischungen ein oder mehrere Füllstoffe enthalten, wie organische Füllstoffe, basierend beispielsweise auf Holz, Leder, Kork oder Kokosmaterial, oder anorganische Füllstoffe, wie Gips, Kalk, Kreide, Talk, Kieselsäuren, Kaoline, Silicate oder Titandioxid. Vorzugsweise enthalten die Trockenmischungen für die thermoplastischen Umformungstechniken weniger als 30 Gew.-%, besonders bevorzugt weniger als 15 Gew.-% und noch mehr bevorzugt weniger als 5 Gew.-% Füllstoffe, je bezogen auf das Trockengewicht der jeweiligen Trockenmischung. Am meisten bevorzugt enthalten die Trockenmischungen keine Füllstoffe.

Die einzelnen Bestandteile der Trockenmischungen werden gemischt und anschließend mit thermoplastischen Umformungstechniken zu latente Wärmespeicher enthaltenden Flächengebilden oder Formkörper verarbeitet.

Das Mischen kann beispielsweise in einem Heiß-Kühl-Mischer, aber auch über Direktgranulierung, beispielsweise in einem Extruder, Palltruder oder Agglomerator erfolgen. Vorzugsweise erfolgt das Mischen in einem Mehrwellenextruder, Planetwalzenextruder, besonders bevorzugt in einem Zweiwellenextruder, insbesondere einem gegenläufigen Zweiwellenextruder.

Geeignete thermoplastische Umformungstechniken sind Extrudieren, Spritzgießen, Verpressen, Granulieren und Kalandrieren. Bevorzugt sind das Extrudieren und insbesondere das Verpressen.

Vorzugsweise werden mittels thermoplastischer Umformungstechniken zuerst Granulate, Pellets oder pulverförmige Compounds hergestellt, die anschließend mittels weiterer thermoplastischer Umformungstechniken weiterverarbeitet werden. Die Granulate oder Pellets haben vorzugsweise Partikelgrößen von 2 bis 10 mm.

Die Verarbeitungstemperatur beim Mischen beträgt im Allgemeinen 0°C bis 120°C, vorzugsweise 20°C bis 100°C und besonders bevorzugt 40°C bis 100°C. Beim thermoplastischen Verarbeiten beträgt die Verarbeitungstemperatur im Allgemeinen 80°C bis 250°C, vorzugsweise 100°C bis 180°C. Die genannten Temperaturbereiche sind besonders vorteilhaft, damit die Polymere in Form von in Wasser redispergierbaren Polymerpulvern, und die weiteren Komponenten innig gemischt werden und die Polymere ihre Bindemittelwirkung entfalten. Bei höheren Temperaturen können schadhafte Produkte gebildet werden.

Die erfindungsgemäße Vorgehensweise eignet sich zur Herstellung von verschiedensten Flächengebilden oder Formkörpern, wie Platten, Folien, Bahnen oder sonstige Rollware. Die Flächengebilde oder Formkörper können mit weiteren Materialien zu Verbundwerkstoffen verarbeitet werden, beispielsweise durch Verkleben mit Holzleim auf Holzplatten. Entsprechende Produkte finden beispielsweise Verwendung in der Bauindustrie, insbesondere bei der Errichtung von Gebäudeteilen oder Gebäudebestandteilen, wie Decken, Wände oder Böden. Weitere Anwendungsgebiete sind die Schuh-, Bekleidungs-, Sport-, Freizeitindustrie oder insbesondere die Möbel-Industrie.

Überraschenderweise werden trotz der thermoplastischen Verarbeitung bei der erfindungsgemäßen Vorgehensweise vorzugsweise weniger 3 Gew.-% , besonders bevorzugt weniger als 2 Gew.-% und am meisten bevorzugt weniger als 1 Gew.-% der Mikrokapseln beschädigt; beschädigt bedeutet hierbei, dass das Wärme speichernde Material in Folge der thermoplastischen Verarbeitung aus den Mikrokapseln entweichen kann.

Insbesondere die Ethylen-Einheiten enthaltenden Mischpolymerisate sind besonders vorteilhaft für die Verarbeitbarkeit der erfindungsgemäßen Trockenmischungen. Auch die erfindungsgemäßen Glasübergangstemperaturen Tg der Polymere sind für die Verarbeitbarkeit der Trockenmischungen dienlich. Mischpolymerisate enthaltend Einheiten von Vinylacetat und Ethylen sind besonders vorteilhaft für die Weiterverarbeitung der Flächengebilde oder Formkörper, beispielsweise mittels Verklebung, beispielsweise mit Holzleim.

Die erfindungsgemäß hergestellten Flächengebilde oder Formkörper zeichnen sich durch hohe mechanische Festigkeiten aus, selbst bei sehr hohen Anteilen an Mikrokapseln oder weiteren Bestandteilen. Es können überraschend große Mengen an latent Wärme speichernden Mikrokapseln in die Flächengebilde oder Formkörper eingebracht werden, d.h. hohe Füllgrade erreicht werden. Auch die Form und insbesondere die Schichtdicke der erfindungsgemäßen Produkte kann in einem weiteren Umfang variiert werden. Des Weiteren sind Flächegebilde mit homogener Oberfläche zugänglich. Bei der Durchführung des erfindungsgemäßen Verfahrens tritt im Vergleich zum Gießharzverfahren, beispielsweise mit Polyurethan-Gießharzen, erfreulicherweise keine oder in geringerem Maße Schaumbildung auf. Die erzeugten Flächengebilde oder Formkörper sind deutlich kompakter und weisen weniger Lufteinschlüsse auf. Es können Flächengebilde in unterschiedlichen Stärken "endlos" produziert werden. Es entstehen glatte, geschlossene Oberflächen, welche direkt weiter verarbeitet werden können.

Die nachfolgenden Beispiele dienen zur weiteren Erläuterung der Erfindung:

### Folgende Materialien wurden eingesetzt:

Vinnex A, B bzw. C:
Polyvinylalkohol stabilisierte Copolymere in Form von in Wasser redispergierbaren Polymerpulvern mit folgenden Glasübergangstemperaturen Tg:
   - Vinnex A: Tg von 16°C;
   - Vinnex B: Tg von -14°C;
   - Vinnex C: Tg von -7°C.
Micronal DS 5040 X:
   Mikrokapseln, die als Wärme speicherndes Material Paraffin (Phasenübergangstemperatur von 23°C) enthalten, und deren Hülle aus einem hochvernetzten Polymethylmethacrylat besteht.

### Verfahren: Herstellung der Flächengebilde mittels Pressen (Beispiele 2 bis 4):

Die in der Tabelle genannten Materialien wurden in den dort genannten Mengenverhältnissen auf einem Walzenstuhl für 5 min bei 130°C gemischt. Das erzeugte Walzfell wurde anschließend auf einer statischen Presse bei einer Temperatur von 150°C und einem Druck von 5 N/mm² und einer Presszeit von 5 min zu Pressplatten mit einer Dicke von 2 mm verarbeitet.

### Verfahren: Herstellung der Flächengebilde mittels Extrusion (Beispiel 1):

Die in der Tabelle genannten Materialien wurden in den dort genannten Mengenverhältnissen in einem Kühlmischer 5 min gemischt. Anschließend wurde die Mischung auf einem Doppelschneckenextruder Weber DS85 mit EMO Platten Düse zu Flächengebilden mit einer Dicke von 8 mm verarbeitet.

**Tabelle:**

| | Bsp. 1 | Bsp. 2 | Bsp. 3 | Bsp. 4 |
|---|---|---|---|---|
| | | | | |
| Verfahren | Extrusion | Pressen | Pressen | Pressen |
| | | | | |
| Micronal DS 5040 X [Gew.-T] | 50 | 50 | 50 | 50 |
| Vinnex A [Gew.-T] | 50 | | | 50 |
| Vinnex B [Gew.-T] | | 50 | | |
| Vinnex C [Gew.-T] | | | 50 | |
| | | | | |
| Shore A | 90,3 | 65,6 | 77,4 | 91,7 |
| Shore D | 31,6 | 10,6 | 16,4 | 30,1 |
| | | | | |
| Zugspannung [MPa] | 4,31 | 1,74 | 2,33 | 5,58 |
| Dehnung [%] | 87,86 | 331,9 | 261,6 | 126,9 |
| Zug-E-Modul | 378,02 | | | |
| | | | | |
| DSC Messung [Jg^-1] | 47, 99 | 44,09 | 43,46 | 46, 02 |

### Austestung:

Die Shore-Härte A wie auch die Shore-Härte D der Pressplatten wurde nach DIN 53505 bestimmt.

Die mechanische Festigkeit der Pressplatten wurde im Zugversuch durch Ermittlung der Zugspannung und Dehnung bei Bruch und das Zug-E-Modul wurde gemäß DIN EN ISO 527 1-3 bzw. DIN 53504 bestimmt.

DSC-Messung:
Die Bestimmung der Wärmespeicherkapazität der Flächengebilde erfolgte mit dem Gerät DSC Mettler Toledo DSC1.306 unter Anwendung des folgenden Temperaturprogramms: Das jeweilige Flächengebilde wurde je mit einer Geschwindigkeit von 1K/min ausgehend von 0,0°C auf 35°C erwärmt, anschließend auf -30°C abgekühlt und schließlich wieder auf 35°C erwärmt.

Die Ergebnisse der Austestung sind in der Tabelle aufgeführt.

Das theoretisch erreichbare Ergebnis für die Wärmespeicherkapazität der Flächengebilde beträgt 50 J/g. Die Beispiele 1 bis 4 kommen diesem Wert sehr nahe. Daraus geht hervor, dass bei der thermoplastischen Verarbeitung nur eine sehr geringe Anzahl der Mikrokapseln Schaden genommen hat.

## Patentansprüche

1. Verfahren zur Herstellung von latente Wärmespeicher enthaltenden Flächengebilden oder Formkörpern, **dadurch gekennzeichnet, dass**
Trockenmischungen umfassend ein oder mehrere Mikrokapseln, die ein oder mehrere latente Wärmespeicher enthalten, und ein oder mehrere Schutzkolloid-stabilisierte, in Wasser redispergierbare Polymerpulver von Polymeren auf Basis von einem oder mehreren ethylenisch ungesättigten Monomeren ausgewählt aus der Gruppe umfassend Vinylester, (Meth)-acrylsäureester, Vinylaromaten, Olefine, 1,3-Diene und Vinylhalogenide
mittels thermoplastischer Umformungstechniken ausgewählt aus der Gruppe umfassend Extrudieren, Spritzgießen, Verpressen und Kalandrieren verarbeitet werden.

2. Verfahren zur Herstellung von Flächengebilden oder Formkörpern nach Anspruch 1, **dadurch gekennzeichnet, dass** ein oder mehrere latente Wärmespeicher ausgewählt werden aus der Gruppe umfassend aliphatische Kohlenwasserstoff-Verbindungen, aromatische Kohlenwasserstoff-Verbindungen, gesättigte oder ungesättigte C₆ bis C₃₀-Fettsäuren, Fettalkohole, C₆ bis C₃₀-Fettamine, Ester wie C₁ bis C₁₀-Alkylester von Fettsäuren, natürliche und synthetische Wachse sowie halogenierte Kohlenwasserstoffe.

3. Verfahren zur Herstellung von Flächengebilden oder Formkörpern nach Anspruch 1 bis 2, **dadurch gekennzeichnet, dass** die Mischungen die Mikrokapseln und die Polymere auf Basis von einem oder mehreren ethylenisch ungesättigten Monomeren in einem Gewichtsverhältnis von 4 : 1 bis 1 : 4 enthalten.

4. Verfahren zur Herstellung von Flächengebilden oder Formkörpern nach Anspruch 1 bis 3, **dadurch gekennzeichnet, dass** die Mischungen weniger als 30 Gew.-% Füllstoffe enthalten, bezogen auf das Trockengewicht einer Mischung.

5. Verfahren zur Herstellung von Flächengebilden oder Formkörpern nach Anspruch 1 bis 4, **dadurch gekennzeichnet, dass** die Mikrokapseln und die Polymere auf Basis von einem oder mehreren ethylenisch ungesättigten Monomeren in einem Heiß-Kühl-Mischer, Extruder, Palltruder oder Agglomerator gemischt werden.

6. Verfahren zur Herstellung von Flächengebilden oder Formkörpern nach Anspruch 1 bis 5, **dadurch gekennzeichnet, dass** Platten, Folien, Bahnen oder sonstige Rollware hergestellt werden.

7. Latente Wärmespeicher enthaltende Flächengebilde oder Formkörper erhältlich nach den Verfahren der Ansprüche 1 bis 6.

8. Verwendung der Verfahrensprodukte aus den Ansprüchen 1 bis 6 für die Errichtung von Decken, Wänden oder Böden oder in der Schuh-, Bekleidungs-, Sport-, Freizeit- oder der Möbel-Industrie.

## Claims

1. A process for the production of moldings or sheet materials comprising latent heat accumulators, **characterized in that**
dry mixtures comprising one or more microcapsules and one or more protective-colloid-stabilized, water-redispersible polymer powders of polymers based on one or more ethylenically unsaturated monomers selected from the group comprising vinyl esters, (meth)acrylic esters, vinylaromatics, olefins, 1,3-dienes, and vinyl halides, where said microcapsules comprise one or more latent heat accumulators,
are processed by means of thermoplastic forming techniques selected from the group comprising extrusion, injection molding, pressing, and calendering.

2. The process for the production of moldings or sheet materials as claimed in claim 1, **characterized in that** one or more latent heat accumulators is/are selected from the group comprising aliphatic hydrocarbon compounds, aromatic hydrocarbon compounds, saturated or unsaturated C₆ to C₃₀-fatty acids, fatty alcohols, C₆ to C₃₀-fatty amines, esters such as C₁ to C₁₀-alkyl esters of fatty acids, natural and synthetic waxes, and halogenated hydrocarbons.

3. The process for the production of moldings or sheet materials as claimed in claim 1 or 2, **characterized in that** the mixtures comprise the microcapsules and the polymers based on one or more ethylenically unsaturated monomers in a ratio by weight of from 4:1 to 1:4.

4. The process for the production of moldings or sheet materials as claimed in any of claims 1 to 3, **characterized in that** the mixtures comprise less than 30% by weight of fillers, based on the dry weight of a mixture.

5. The process for the production of moldings or sheet materials as claimed in any of claims 1 to 4, **characterized in that** the microcapsules and the polymers based on one or more ethylenically unsaturated monomers are mixed in an agglomerator, Palltruder, extruder, or heatable/coolable mixer.

6. The process for the production of moldings or sheet materials as claimed in any of claims 1 to 5, **characterized in that** sheets, foils, webs, or any other roll product is/are produced.

7. A molding or sheet material comprising latent heat accumulators and obtainable from the processes of claims 1 to 6.

8. The use of the products of the processes of claims 1 to 6 for the construction of ceilings, walls, or floors, or in the shoe industry, apparel industry, sports industry, leisure industry, or the furniture industry.

## Revendications

1. Procédé pour la fabrication de structures plates ou de corps façonnés, contenant des accumulateurs de chaleur latente, **caractérisé en ce que** des mélanges secs comprenant une ou plusieurs microcapsules, qui contiennent un ou plusieurs accumulateurs de chaleur latente, et une ou plusieurs poudres polymères stabilisées par des colloïdes de protection, redispersibles dans l'eau, de polymères à base d'un ou de plusieurs monomères éthyléniquement insaturés, choisis dans le groupe comprenant les esters de vinyle, les esters de l'acide (méth)acrylique, les aromatiques de vinyle, les oléfines, les 1,3-diènes et les halogénures de vinyle sont transformés au moyen de techniques de façonnage thermoplastique, choisies dans le groupe comprenant l'extrusion, le moulage par injection, la compression et le calandrage.

2. Procédé pour la fabrication de structures plates ou de corps façonnés selon la revendication 1, **caractérisé en ce qu'**un ou plusieurs accumulateurs de chaleur latente sont choisis dans le groupe comprenant les composés hydrocarbonés aliphatiques, les composés hydrocarbonés aromatiques, les acides gras saturés ou insaturés en C₆-C₃₀, les alcools gras, les amines grasses en C₆-C₃₀, les esters tels que les esters C₁-C₁₀-alkyliques d'acides gras, les cires naturelles et synthétiques ainsi que les hydrocarbures halogénés.

3. Procédé pour la fabrication de structures plates ou de corps façonnés selon la revendication 1 à 2, **caractérisé en ce que** les mélanges contiennent les microcapsules et les polymères à base d'un ou de plusieurs monomères éthyléniquement insaturés dans un rapport pondéral de 4:1 à 1:4.

4. Procédé pour la fabrication de structures plates ou de corps façonnés selon la revendication 1 à 3, **caractérisé en ce que** les mélanges contiennent moins de 30% en poids de charges, par rapport au poids sec d'un mélange.

5. Procédé pour la fabrication de structures plates ou de corps façonnés selon la revendication 1 à 4, **caractérisé en ce que** les microcapsules et les polymères à base d'un ou de plusieurs monomères éthyléniquement insaturés sont mélangés dans un mélangeur chaud-froid, une extrudeuse, un Palltruder ou un agglomérateur.

6. Procédé pour la fabrication de structures plates ou de corps façonnés selon la revendication 1 à 5, **caractérisé en ce qu'**on fabrique des plaques, des feuilles, des bandes ou d'autres produits sous forme de rouleau.

7. Structures plates ou corps façonnés contenant des accumulateurs de chaleur latente, pouvant être obtenus selon le procédé selon les revendications 1 à 6.

8. Utilisation des produits de procédé des revendications 1 à 6 pour la construction de plafonds, de parois ou de sols ou dans l'industrie des chaussures, des vêtements, des sports, des loisirs ou des meubles.
